# EUROPEAN PATENT APPLICATION

(11) **EP 2 680 055 A1**
(43) Date of publication of application: **01.01.2014**
(21) Application number: 13173964.1
(22) Date of filing: 27.06.2013
(51) Int. Cl.: G02B 6/44

(54) **Cable storage tray**

(30) Priority: 28.06.2012 US 201261665722 P; 14.03.2013 US 201361782864 P
(71) Applicant: Tyco Electronics Raychem BVBA, 3010 Kessel-Lo (BE)
(72) Inventor: Liefsoens, Ronnie Rosa Georges, 3080 Tessenderlo (BE); Houben, Diederik, 3540 Berbroek (BE)
(74) Representative: Grünecker, Kinkeldey, Stockmair & Schwanhäusser

(57) **Abstract**

A cable storage tray (10, 110, 210, 310) includes a body (12, 212, 312), a cable management structure positioned on the body, and at least one magnet (18) such that the body (12, 212, 312) is magnetically attachable to a ferromagnetic surface via the at least one magnet (18).

## Description

### Technical Field

The present disclosure relates to telecommunications devices, and more particularly, to telecommunications devices including cable management and storage features for cables such as fiber optic cables.

### Background

Telecommunications systems typically employ a network of telecommunications cables capable of transmitting large volumes of data and voice signals over relatively long distances. The telecommunications cables can include fiber optic cables, electrical cables, or combinations of electrical and fiber optic cables. A typical telecommunications network also includes a plurality of telecommunications enclosures integrated throughout the network of telecommunications cables. The telecommunications enclosures are adapted to house and protect telecommunications components such as splices, termination panels, power splitters, and wavelength division multiplexers. Management and storage of cabling within and around such telecommunications enclosures have always posed challenges. Improvements in cable management and storage devices are desired.

### Summary

The present disclosure is directed to a cable management/storage device including cable management features, wherein the device is removably mountable via magnets to a ferromagnetic surface, wherein the ferromagnetic surface might form a portion of a telecommunications device.

According to one aspect of the disclosure, the cable management/storage device is provided in the form of a tray having a planar configuration including radius limiters projecting from a first side for managing cables and magnets provided on an opposing second side for removably attaching the tray to a ferromagnetic surface.

According to another aspect, the cable storage tray includes a body, a cable management structure positioned on the body, and at least one magnet such that the body is magnetically attachable to a ferromagnetic surface via the at least one magnet.

According to another aspect, the cable storage tray includes a generally planar body defining a first side and an opposing second side. A first outer radius limiter and a second outer radius limiter project from the first side and a first inner radius limiter and a second inner radius limiter also project from the first side, the inner radius limiters surrounded at least partially by the outer radius limiters so as to define an inner cable channel thereinbetween and the first inner radius limiter and the second inner radius limiter defining a cross channel thereinbetween, the cross channel communicating with the inner cable channel. Each of the outer radius limiters and the inner radius limiters defines a curved wall and includes cable management fingers projecting generally perpendicular to the curved walls thereof. The cable management fingers of the inner radius limiters are configured to retain a cable within the inner cable channel and the cable management fingers of the outer radius limiters are configured to retain a cable wound around the outer radius limiters. The cable storage tray further includes at least one magnet such that the second side of the body is magnetically attachable to a ferromagnetic surface via the at least one magnet.

According to another aspect, the cable storage tray includes a body defining a first side and an opposing second side, the first side defining an inner area for storing cables, the first side also defining an outer area for storing cables, wherein the outer area is separated from the inner area by at least one wall, and at least one magnet such that the second side of the body is magnetically attachable to a ferromagnetic surface via the at least one magnet.

According to another aspect, the cable management/storage device can be constructed from identical halves, which can snap-fit together. An additional feature of the example cable management/storage device includes a movably mounted cable management finger, which can be snap-fit to the device for improved cable retention.

A method of managing a telecommunications cable is also disclosed. The method includes magnetically mounting a cable storage tray to a ferromagnetic surface, the cable storage tray defining a cable management structure and wrapping at least a portion of the telecommunications cable around the cable management structure.

A variety of additional aspects will be set forth in the description that follows. These aspects can relate to individual features and to combinations of features. It is to be understood that both the foregoing general description and the following detailed description are exemplary and explanatory only and are not restrictive of the broad concepts upon which the embodiments disclosed herein are based.

### Brief Description of the Drawings

FIG. 1 is a perspective view of a cable storage tray having features that are examples of inventive aspects in accordance with the present disclosure;
FIG. 2 is another perspective view of the cable storage tray of FIG. 1;
FIG. 3 illustrates a perspective view of the cable storage tray of FIGS. 1 and 2 magnetically mounted to a portion of a telecommunications enclosure;
FIG. 4 illustrates another perspective view of the cable storage tray mounted to the telecommunications enclosure of FIG. 3;
FIG. 5 illustrates another perspective view of the cable storage tray mounted to the telecommunications enclosure of FIGS. 3-4;
FIG. 6 illustrates the splice tray assembly of the telecommunications enclosure of FIGS. 3-5;
FIG. 7 illustrates an example cable routing configuration for a loop cable using the cable storage tray of FIGS. 1-2, wherein a looped section of the loop cable is shown wrapped around one of the inner radius limiters of the storage tray;
FIG. 7A illustrates a close-up view of a portion of the looped section of the loop cable and the inner radius limiter of FIG. 7;
FIG. 8 illustrates a further portion of the loop cable of FIG. 7 stored using the cable storage tray of FIGS. 1-2;
FIG. 8A illustrates a close-up view of a portion of the loop cable stored using the cable storage tray of FIGS. 1-2;
FIG. 9 is a perspective view of a magnet configured for use with the storage tray of FIGS. 1-2;
FIG. 10 illustrates the second side of another embodiment of a cable storage tray having features that are examples of inventive aspects in accordance with the present disclosure, the magnets of the storage tray exposed from the second side thereof;
FIG. 11 is a perspective view of another embodiment of a storage tray having features that are examples of inventive aspects in accordance with the present disclosure;
FIG. 12 is another perspective view of the cable storage tray of FIG. 11, illustrating the second side thereof;
FIG. 13 is a top plan view of the cable storage tray of FIGS. 11-12;
FIG. 14 is a bottom plan view of the cable storage tray of FIGS. 11-13;
FIG. 15 is a cross-sectional view taken along line 15-15 of FIG. 14;
FIG. 16 is a perspective view of another embodiment of a cable storage tray having features that are examples of inventive aspects in accordance with the present disclosure;
FIG. 17 is another perspective view of the example cable storage tray of FIG. 16;
FIG. 18 is a top plan view of the cable storage tray of FIG. 16;
FIG. 19 is a perspective view of one half element of the cable storage tray of FIG. 16, with a cable retention device shown in exploded view;
FIG. 20 is a further perspective view of the one half element of FIG. 19.

### Detailed Description

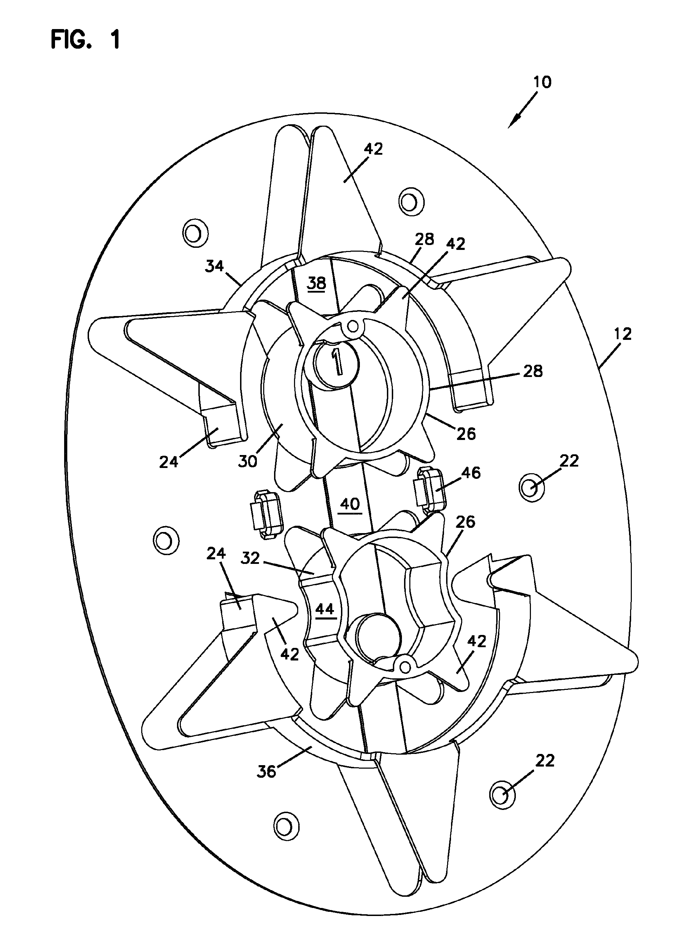

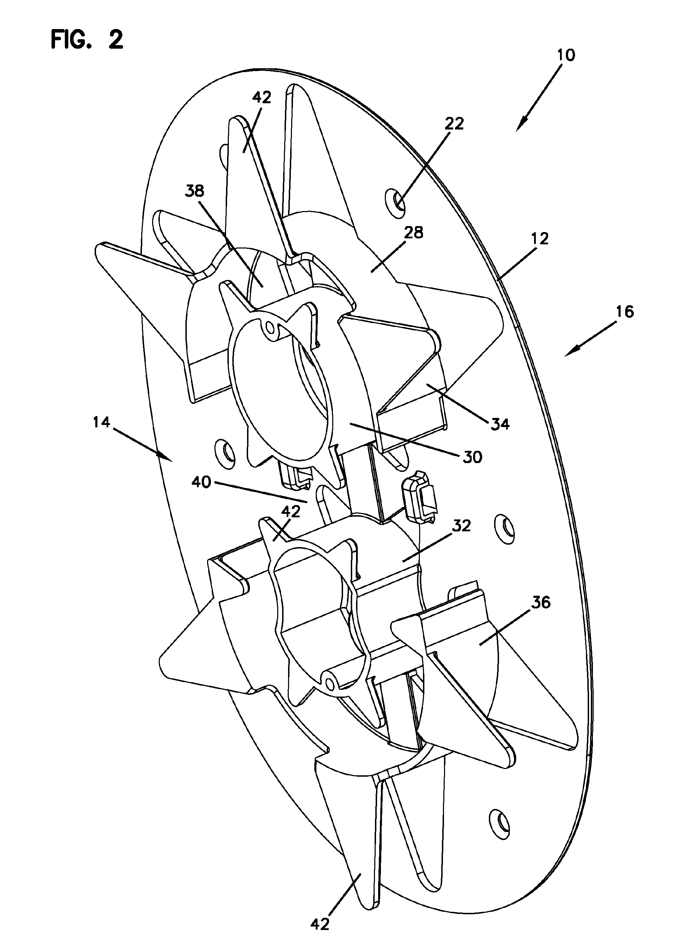

The present disclosure is directed to a cable management/storage device in the form of a tray 10 including cable management features, wherein the tray 10 is removably mountable to a ferromagnetic surface via magnetic force. According to the disclosure, a ferromagnetic surface is a surface made of ferromagnetic materials, such as iron, that attracts a magnetic field produced by a magnet. FIGS. 1 and 2 illustrate perspective views of the cable storage/management tray 10 having features that are examples of inventive aspects in accordance with the present disclosure. According to one example embodiment, the cable storage tray 10 may be used to store or manage telecommunications cables and may be mounted on a telecommunications device wherein the ferromagnetic surface is formed by a portion of the telecommunications device, as will be described in further detail.

The storage tray 10 may be used to manage or store fiber optic cables, electrical cables, or hybrid cables that include a combination thereof. In the depicted embodiment, the storage tray 10 will be described and shown as being used on a fiber optic telecommunications device for storing fiber optic cables 50 routed from the device. As such, the depicted embodiment of the storage tray 10 includes cable management features that are configured for preserving bend radius requirements associated with fiber optic cables 50, noting that the tray 10 may be modified for other types of cabling.

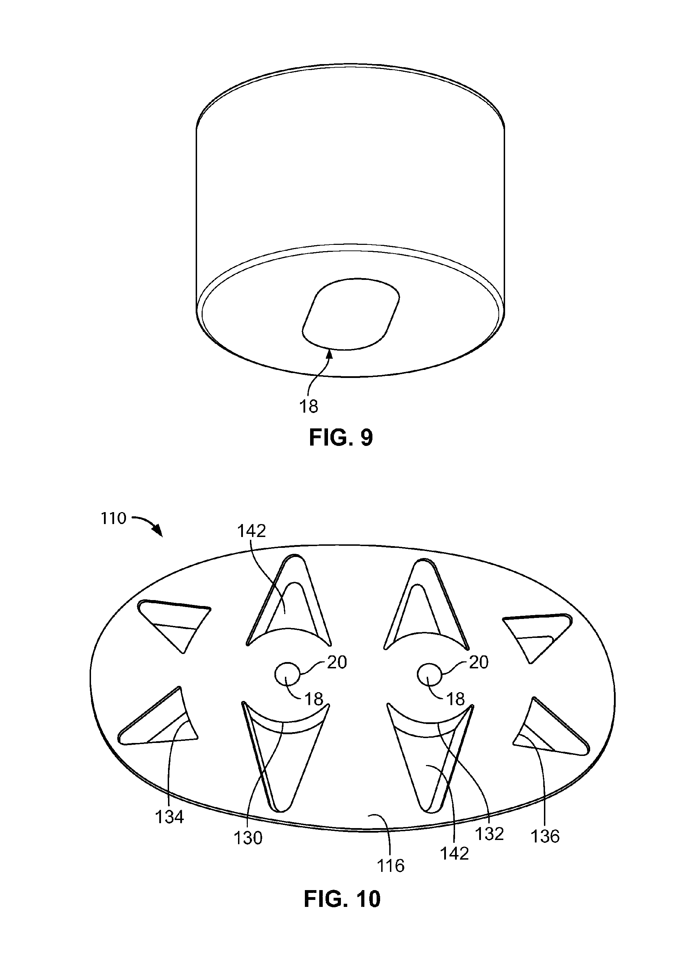

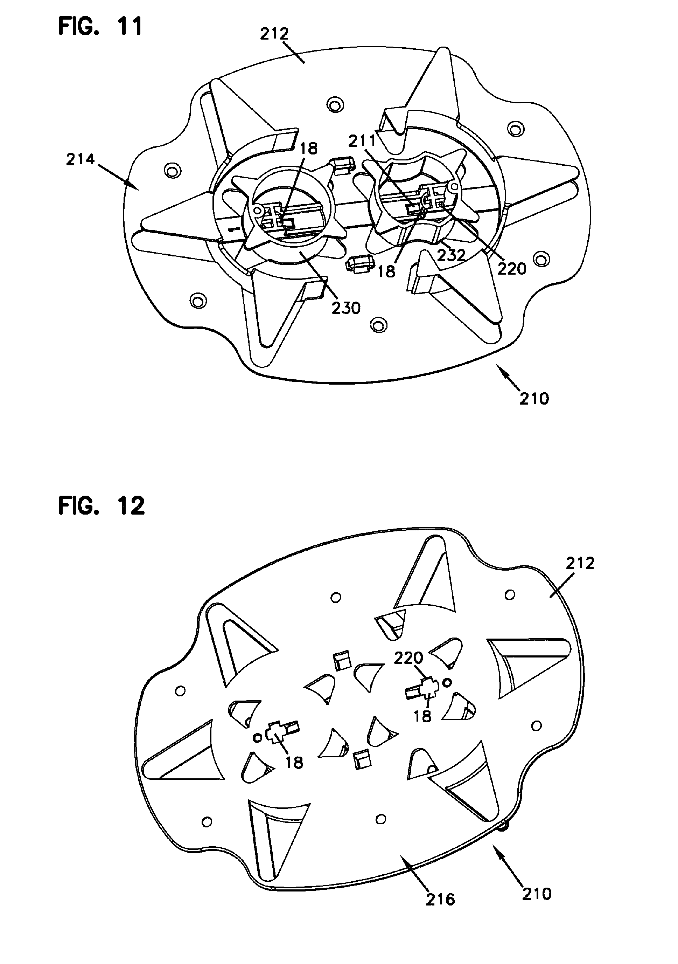

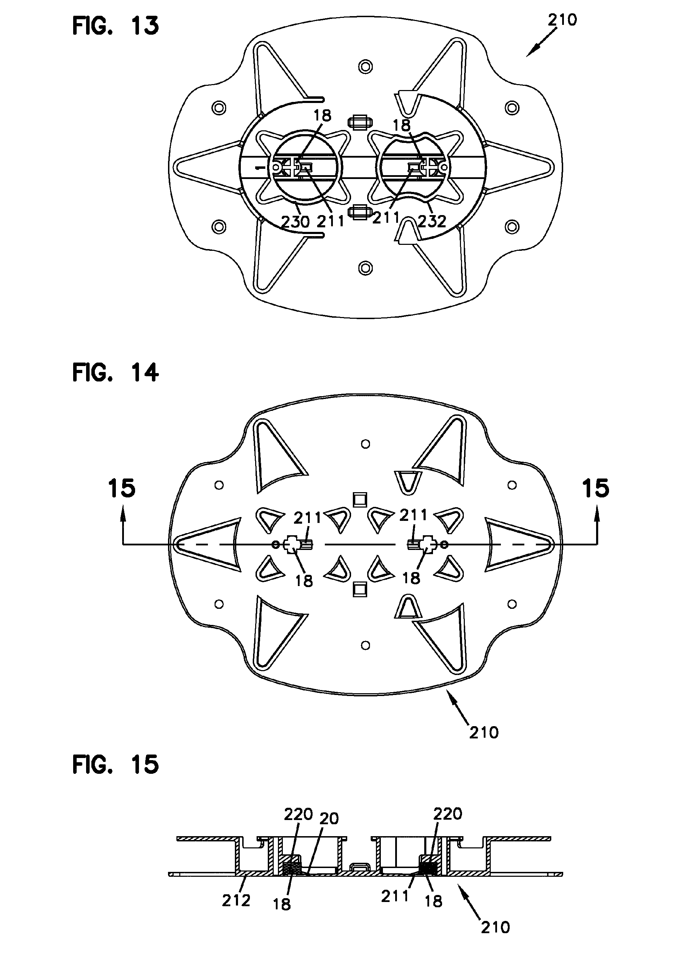

Referring to FIGS. 1-2, the tray 10 defines a body 12 having a generally planar configuration having a first side 14 and an opposing second side 16. The tray 10 is configured to be magnetically attached to a ferromagnetic surface with at least one magnet 18 that is exposed from the second side 16 of the tray. In the depicted embodiment, the tray 10 includes two magnets 18 that are exposed from the second side 16. The magnets 18 are positioned within pockets 20 defined on the tray (seen in the second embodiment of the tray 110 illustrated in FIG. 10). The magnets 18 may be attached to the tray 10 via different attachment methods including via adhesive, via a friction or press-fit, via a snap-fit, etc. A version of the tray that utilizes a snap-fit magnet attachment feature is illustrated in FIGS. 11-15 and will be discussed in further detail below. According to one example attachment method, the magnets 18 may be placed within pockets 20 and partially molded over during the molding process of the tray 10. An example of a magnet 18 that may be usable with the storage tray 10 is shown in FIG. 9.

The second side 116 of another embodiment of the tray 110 is illustrated in FIG. 10, wherein the magnets 18 can be seen within pockets 20. The tray 110, the second side 116 of which is shown in FIG. 10, is a slight variation of the tray 10 illustrated in FIGS. 1-2. The tray 110 shown in FIG. 10, as will be described in further detail, includes cable management features that are slightly different than the tray 10 illustrated in FIGS. 1-2.

The tray 10 depicted in FIGS. 1-2 also defines fastener holes 22 for attaching the tray 10 to surfaces where the magnets 18 cannot be utilized.

Still referring to FIGS. 1-2, the first side 14 of the tray 10 is used for managing and/or storing cables. The tray 10 includes a first set of cable management structures 24 (also referred to herein as an outer set) and a second set of cable management structures 26 (also referred to herein as an inner set) projecting outwardly from the first side 14. Both the inner set of cable management structures 26 and the outer set of cable management structures 24 are provided in the form of radius limiters. The radius limiters are defined by curved walls or spools 28 projecting generally perpendicularly from a plane defined by the first side 14.

In the depicted embodiment, the tray 10 defines a first inner radius limiter 30 and a second inner radius limiter 32 surrounded by a first outer radius limiter 34 and a second outer radius limiter 36. An inner cable channel 38 is defined between the inner radius limiters 30, 32 and the outer radius limiters 34, 36. A cross channel 40 is defined between the first inner radius limiter 30 and the second inner radius limiter 32.

Each of the first and second outer radius limiters 34, 36 defines cable management fingers 42 that project from the curved walls 28. In the depicted embodiment, three cable management fingers 42 project outwardly from the first outer radius limiter 34. Three cable management fingers 42 project outwardly and one cable management finger 42 projects inwardly from the second outer radius limiter 36, the inwardly projecting cable management finger 42 configured to keep a cable 50 within the inner channel 38.

Similar to the set of outer radius limiters 34, 36, each of the first and second inner radius limiters 30, 32 includes cable management fingers 42 projecting outwardly therefrom. The fingers 42 of the inner radius limiters 30, 32 extend toward the outer radius limiters 34, 36 and are configured to retain cables 50 within the inner and cross channels 38, 40.

Still referring to FIGS. 1-2, one or more of the inner radius limiters 30, 32 may define notched regions 44 around the peripheries thereof. These notched regions 44 can accommodate a user's finger and facilitate finger access to cabling that are wound around the inner radius limiters 30, 32 and can also be configured to accommodate variations in length of fiber optic cables 50 being routed around the tray 10. For example, longer cables 50 may be curved into one or both of the notched regions 44 to take up the extra length when the cables 50 are routed around the storage tray 10.

Still referring to FIGS. 1-2, the depicted embodiment of the tray 10 also includes a pair of cable tie-down loops 46 for attaching cables 50 to the tray 10 via cable tie-downs.

It should be noted that the arrangement of the cable management features depicted for the tray 10 in FIGS. 1-2 is simply one arrangement and depending upon the types, sizes, or numbers of cables that are being stored on the tray 10, the arrangement of the cable management features may be varied. For example, FIG. 10 illustrates another embodiment of a cable storage tray 110 that defines a different arrangement in the form of two cable management fingers 142 projecting from each outer radius limiter 134, 136 and two cable management fingers 142 projecting from each inner radius limiter 130, 132.

As noted above, the cable storage tray 10 of the present disclosure is configured to be removably attached to any ferromagnetic surface, such as a surface including iron, via magnetic force. Furthermore, the magnets 18 allow the storage tray 10 to be mounted in any given 360-degree orientation along its planar configuration, depending upon the where cables 50 need to enter or exit the tray 10 and depending upon the cable routing arrangement used within the tray 10. For example, the magnetic, movable mounting arrangement of the tray 10 allows the tray 10 to mountable in different orientations along its planar configuration and may allow the tray 10 to be turned to any desired direction (e.g., to take up any extra slack on a cable 50 being stored using the tray 10).

As noted previously, the cable storage tray 10 may be used to store or manage telecommunications cables (e.g., fiber optic cables 50) and may be mounted on a telecommunications device (e.g., a fiber optic telecommunications device), wherein the ferromagnetic surface may be formed by a portion of the telecommunications device.

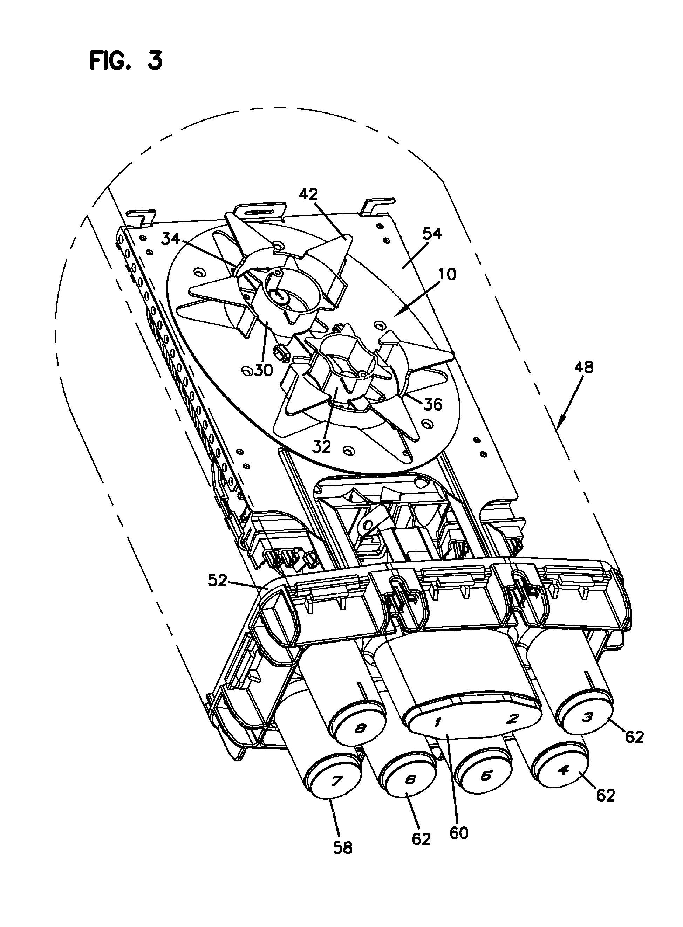

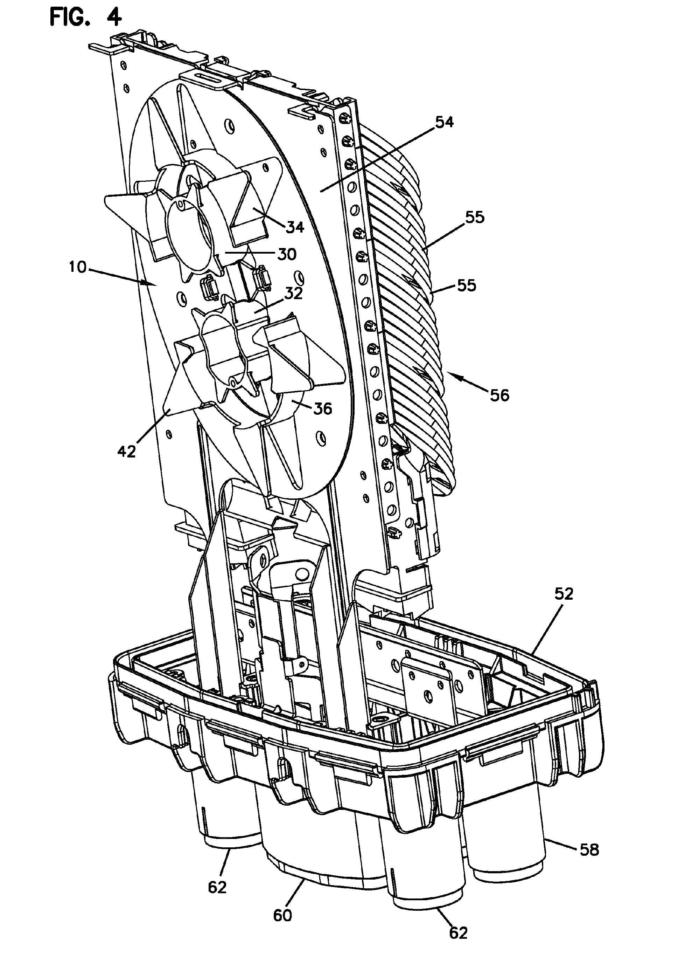

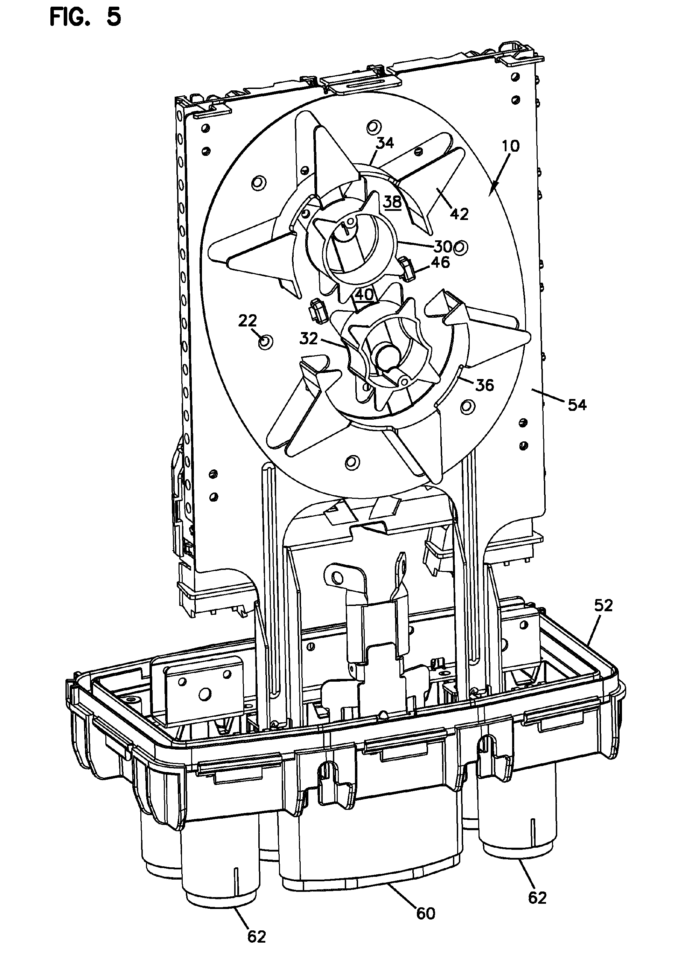

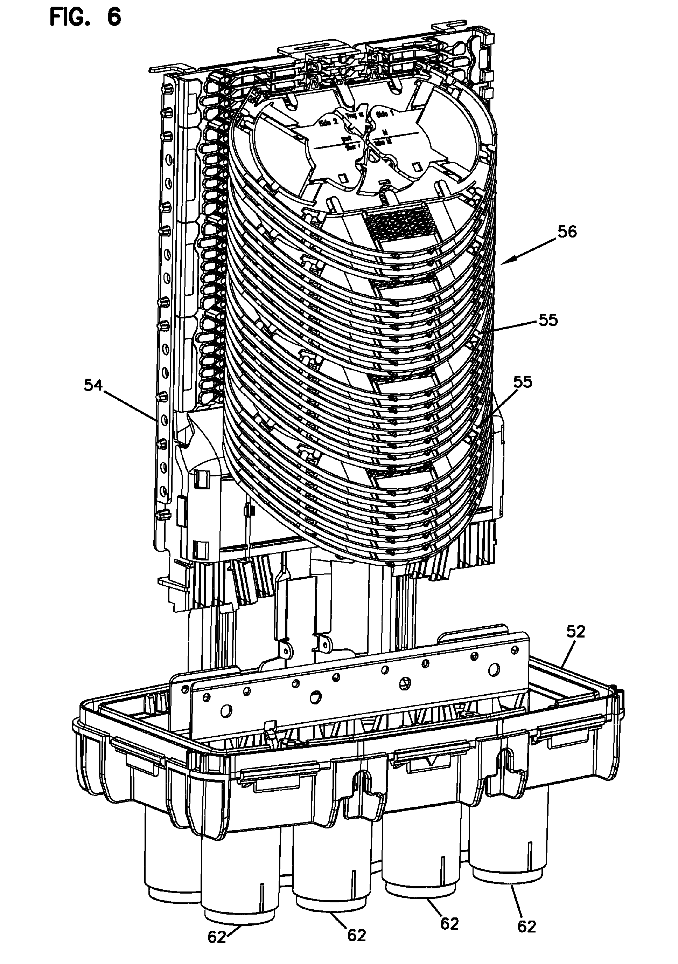

Referring now to FIGS. 3-6, the storage tray is depicted as being used within a telecommunications device in the form of a fiber optic splice enclosure 48 (shown in dashed lines in FIG. 3).

The fiber optic splice enclosure 48 may include a base 52 and a cover that cooperate to define an interior. A gasket or sealing ring may be disposed between the base 52 and the cover around the perimeter of the enclosure 48. The gasket is configured to inhibit dirt, water, or other contaminants from entering the enclosure 48 when the cover is secured to the base 52.

As shown in FIGS. 3-6, the storage tray 10 is magnetically attached to a portion of the base 52 that defines a ferromagnetic surface 54. The portion of the base 52 that defines the ferromagnetic surface 54 may include a splice tray arrangement or assembly 56 on the opposite side thereof from the storage tray 10. A plurality of cable ports 58 may be defined by the enclosure 48 to enable fiber optic cables 50 to be routed into and out of the enclosure 48, some of which may be directed toward the storage tray 10 and some of which may be directed toward the splice trays 55 of the splice tray assembly 56.

In some implementations, the enclosure 48 may include a first input cable port 60 and multiple output cable ports 62. In still other implementations, the enclosure 48 may include a greater or lesser number of input cable ports 60 and/or output cable ports 62. In the example shown, the enclosure defines six output ports 62 and a larger cable input port 60. As used herein, the terms "input" and "output" are used for convenience and are not intended to be exclusory. Optical signals carried over optical fibers may travel in either or both directions. Accordingly, optical fibers routed through the input cable port 60 may carry input and/or output signals.

In some implementations, at least one of the optical fibers routed into the enclosure through the input cable port 60 is optically coupled to at least one of the optical fibers routed into the enclosure through one of the output cable ports 62. For example, the optical fibers may be coupled together at the splice tray assembly 56 (that is made up of a plurality of parallel splice trays 55 that are pivotable between a closed position and an access position). In certain implementations, one or more of the optical fibers also may be routed to a splitter disposed within the enclosure. Fibers output from the splitter may be routed to the splice tray assembly 56. Other optical fibers routed into the enclosure 48 through the input cable port 60 may be routed back out of the enclosure 48 through the output port 62 (i.e., may form an unbroken loop within the enclosure). The storage tray 10 of the present disclosure, according to one example implementation, may be used to store such a loop cable 50.

More information regarding a fiber optic splice enclosure such as the enclosure 48 that might include a base, a cover, a splice tray assembly, and suitable cable ports can be found in U.S. Provisional Patent Application No. 61/506,378, filed July 11, 2011, and entitled "Telecommunications Enclosure with Splice Tray Assembly," the disclosure of which is hereby incorporated herein by reference in its entirety.

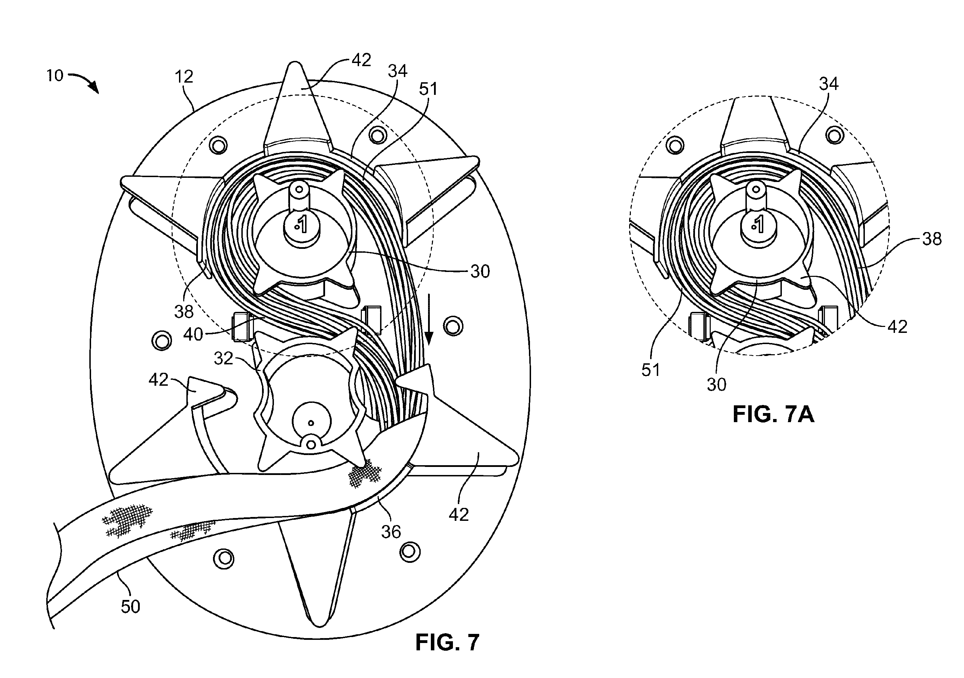

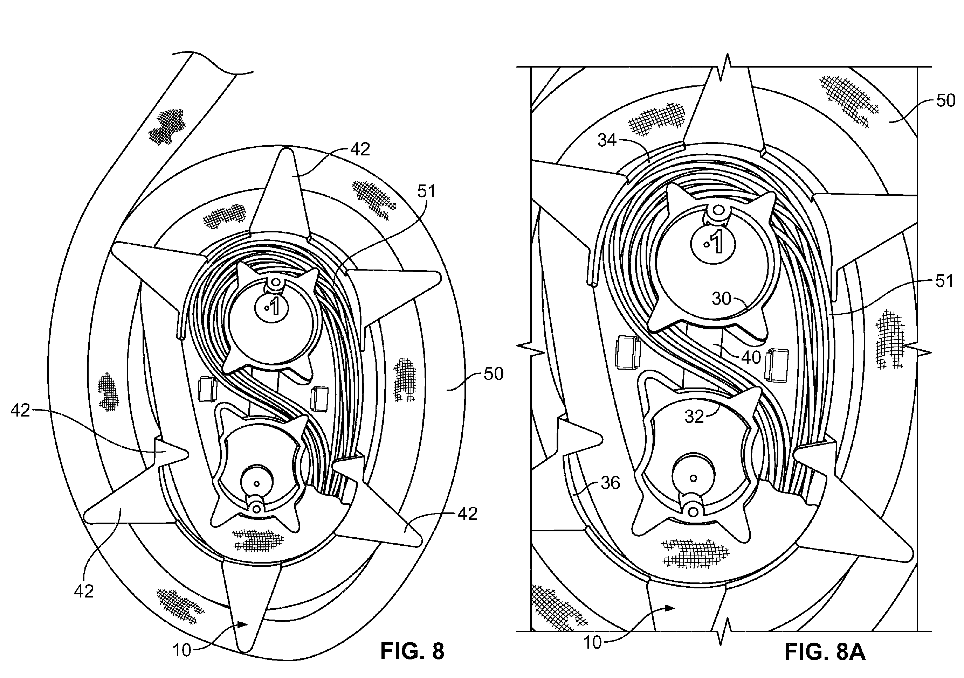

As noted above, if a portion of a loop cable 50 is desired to be stored within the enclosure 48 using the storage tray 10 of the present disclosure, a portion of a looped section 51 of the loop cable 50 is initially wrapped around one of the inner radius limiters (e.g., around limiter 30) as seen in FIGS. 7, 7A, 8, and 8A. In storing the loop cable 50, the inner channel 38 defined between the outer radius limiters 34, 36 and the inner radius limiters 30, 32 may accommodate an S-shaped cable routing, wherein a portion of the looped section 51 of the cable 50 is wound around one of the inner radius limiters 30, 32 and a portion passes through the cross channel 40.

According to one example cable routing method, after the looped section 51 of the cable 50 is placed within the tray 10, the rest of the loop cable 50 can be placed within the tray 10 in the manner illustrated in FIGS. 8 and 8A. According to the example cable routing method, the cable 50 may be passed under the cable management fingers 42 of the second inner radius limiter 32 and also under the cable management finger 42 projecting inwardly from the second outer radius limiter 36 as the cable 50 is transitioned from the inner channel 38 to the periphery of the outer radius limiters 34, 36. Thereafter, the cable 50 can be wrapped around the outer radius limiters 34, 36. It should be noted that the cable management fingers 42 projecting from the outer radius limiters 34, 36 are sized such that multiple rows of the cabling 50 may be wrapped around the outer radius limiters 34, 36.

The outer radius limiters 34, 36 are configured to support the rows of cabling 50 wrapped therearound and also provide protection to the section of the cable 50 that is wound around the inner radius limiters 30, 32.

In some implementations, the section of the loop cable 50 disposed within the enclosure 48 has a length of about 1 meter to about 4 meters. In certain implementations, the section of the loop cable 50 disposed within the enclosure 48 has a length of about 2 meters to about 4 meters. In certain implementations, the section of the loop cable 50 disposed within the enclosure 48 has a length of about 3 meters to about 3.5 meters. In one example implementation, the section of the loop cable 50 disposed within the enclosure 48 has a length of about 3.2 meters. In one example implementation, the section of loop cable 50 disposed within the enclosure 48 has a length of about 3.1 meters. In one example implementation, the section of the loop cable 50 disposed within the enclosure 48 has a length of about 3.3 meters.

It should be noted that a telecommunications device in the form of a fiber optic splice enclosure 48 is simply one example embodiment of a device or an environment where the storage tray 10 may be utilized and should not be used to limit the inventive aspects of the storage tray 10. The tray 10 may be utilized on any ferromagnetic surface near which cable management or storage may be needed.

As noted previously, although the depicted embodiment of the storage tray 10 has been configured for accommodating fiber optic cables 50, e.g., including radius limiters providing the appropriate bend radius requirements for optical fibers, it should be noted that inventive aspects of the tray 10 are applicable for use with other types of cables such as electrical cables or hybrid cables. That one embodiment of the tray has been configured for and is described with respect to fiber optic cables 50 should not limit the inventive aspects of the tray 10.

Referring now to FIGS. 11-15, a third embodiment of a cable storage tray 210 having features that are examples of inventive aspects in accordance with the present disclosure is illustrated. The third embodiment of the tray 210 is similar in features to the first and second embodiments 10, 110 except for the method of placing the magnets 18 on the tray 210. Tray 210 defines a snap-fit arrangement for placing the magnets 18 on the tray so as to expose the magnets 18 from the second side 216 of the body 212 of the tray 210. The body 214 defines a pair of pockets 220 configured to slidably receive the magnets 18 from the first side 214 of the body 212. As shown in FIG. 11, 13, and 15, the magnets 18 are laterally slid into the pockets 220 defined within the inner radius limiters 230, 232. The magnets 18 are retained within the pockets 220 with flexible arms 211 that are biased upwardly. The flexible arms 211 may be molded integrally with the tray body 212.

During insertion of the magnets 18 into the pockets 220, the magnets are slid laterally into the pockets 220 over the flexible arms 211 until the magnets clear the upwardly biased arms 211. If the magnets 18 need to be removed from the pockets 220, the flexible arms 211 may be flexed downwardly to clear the magnets 18 and the magnets 18 may be slid laterally out of the pockets 220.

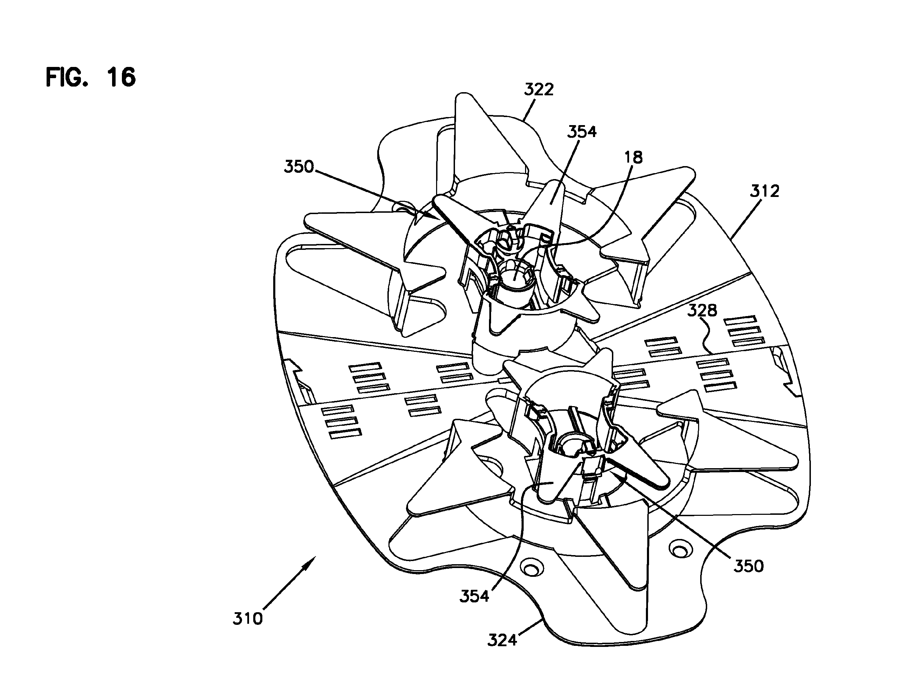

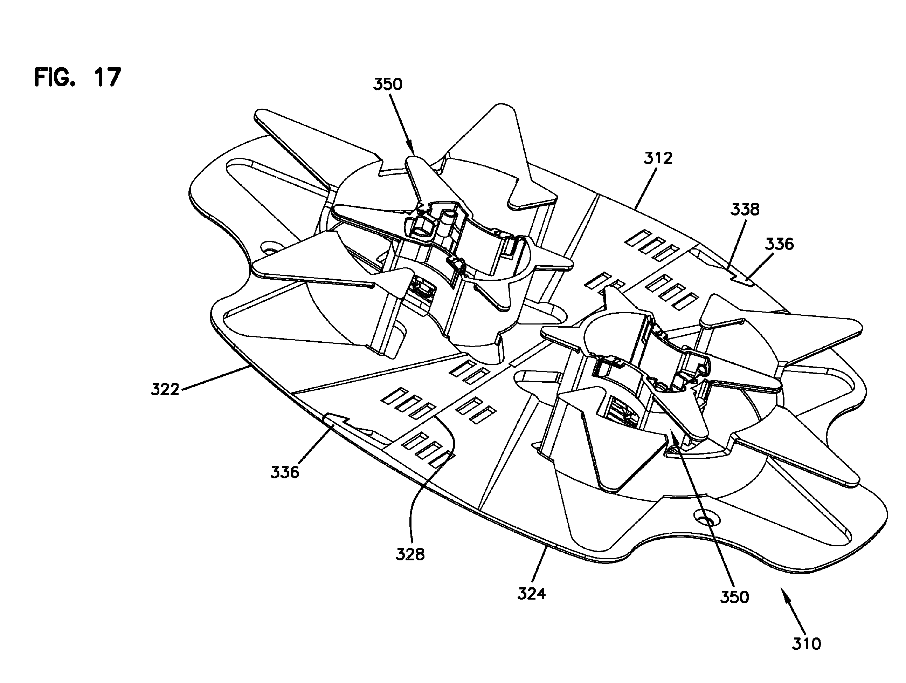

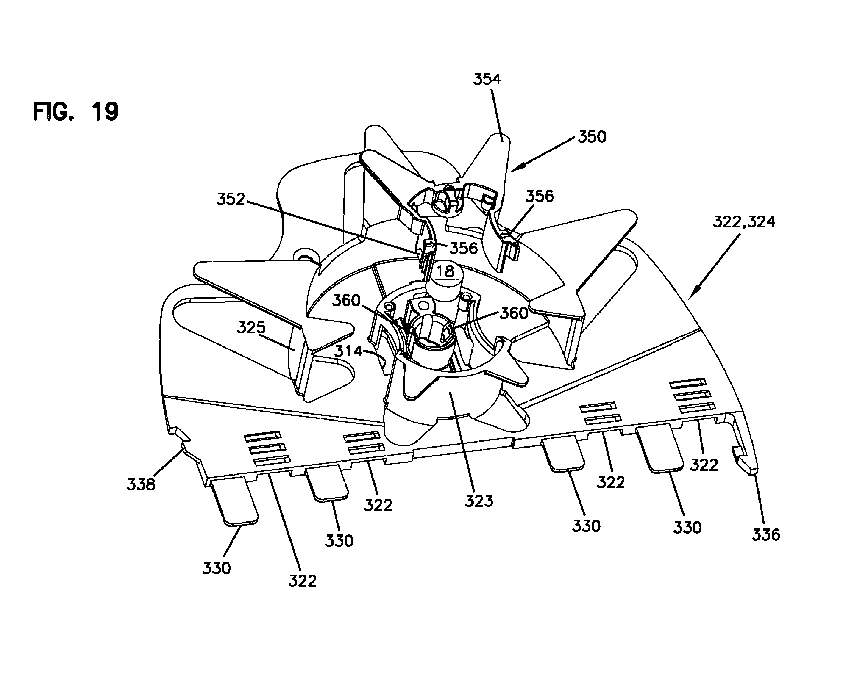

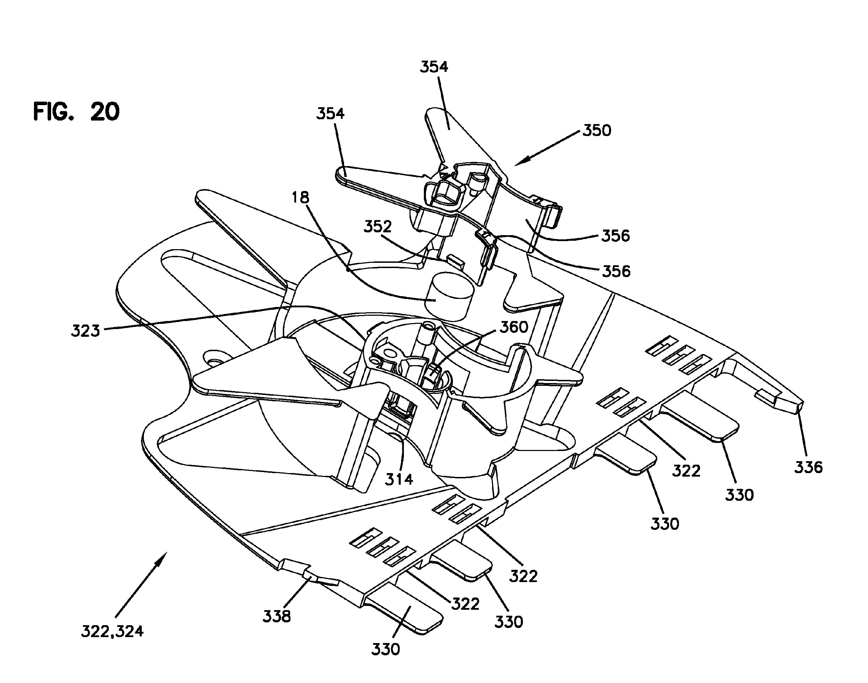

Referring now to FIGS. 16-20, a fourth embodiment of a cable storage tray 310 having features that are examples of inventive aspects in accordance with the present disclosure is illustrated. The fourth embodiment of the tray 310 is similar in features to the earlier described embodiments. One difference is that a body 312 of the tray 310 is constructed from multiple parts. For example, in certain implementations, the body 312 can be constructed from two identical half-elements 322, 324 (e.g., see FIGS. 19 and 20). The halves 322, 324 are mated along a mating edge 328 (FIGS. 16-18).

As shown in FIGS. 19 and 20, each half-element 322, 324 includes a side clip (e.g., a resilient latching finger) 336 at a first side and a mating flange (e.g., a ramp and shoulder structure) 338 at an opposite side of the element 322, 324. The side clip 336 of one element 322, 324 is configured to mate with the reciprocally-shaped mating flange 338 on the other element 322, 324 to couple the elements 322, 324 together. In certain implementations, each element 322, 324 also includes one or more projecting tabs 330 are received in reciprocally-shaped mating slots 322 along the mating edge 328. In the example shown, each element 322, 324 includes four projecting tabs 330. In certain implementations, the projecting tabs 330 are the same size. In other implementations, one or more of the projecting tabs 330 have different sizes.

The tray 310 defines an inner cable channel between inner radius limiters and the outer radius limiters. Each element 322, 324 defines at least one of the inner radius limiters 323 and at least one of the outer radius limiters 325. A cross channel is defined between the inner radius limiters 323 of the first element 322 and the inner radius limiter 323 of the second element 324. Inwardly and/or outwardly projecting cable management fingers 342 extend from the inner and outer radius limiters 323, 325 to keep a cable (e.g., cable 50 of FIG. 7) within the inner channel.

The tray 310 also includes one or more cable management units 350, which are removably mounted to the tray body 312. For example, each management unit 350 may mount to one of the inner radius limiters 323. In some implementations, each management unit 350 may include a latch member 352 that snap-fits to the tray body 312 (e.g., into an opening 314 in the body 312). In other implementations, the tray body 312 can include the latch members that snap-fit to recesses in the management unit 350. In still other implementations, both the tray body 312 and the management unit 350 define both latch members and recesses/openings (e.g., see FIGS. 19 and 20).

Each management unit 350 includes one or more fingers 354 that extend outwardly over the inner channel to keep the cable 50 within the inner channel. Flexible clips 356 are configured to releasably mount the management unit 350 to the body 312. For example, the management units 350 can be mounted to the tray body 312 during the addition and/or removal of cables to the tray 310. With the removable management unit 350, cables can be more easily placed in position. The cables can be retained in position once the management unit 350 is repositioned over the cables on the tray body 312.

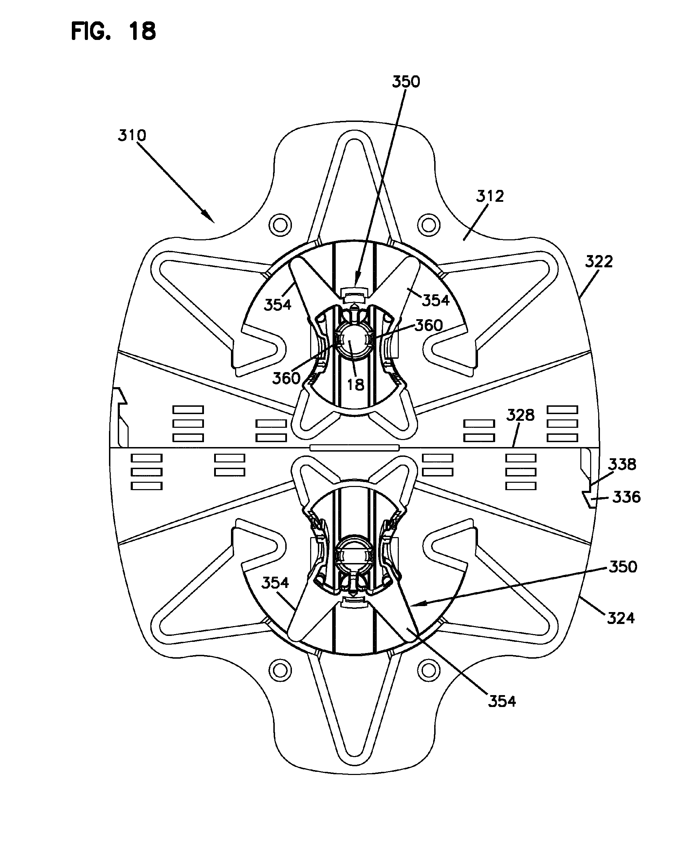

The tray 310 also is configured to receive magnets 18 for mounting the tray 310 to any ferromagnetic surface. In certain implementations, the tray 310 is configured to top-load the magnets 18. For example, the magnets 18 can be positioned within peripheries of the inner radius limiters 323. The magnets 18 are held in place by magnet clips 360. In certain implementations, the clips 360 include one or more latching fingers that snap-fit over the magnets 18 (e.g., see FIGS. 16 and 18). For example, the magnets 18 may each be disposed on a stop surface or ledge within a well and held within the well by the clips 360.

Having described the preferred aspects and embodiments of the present disclosure, modifications and equivalents of the disclosed concepts may readily occur to one skilled in the art. However, it is intended that such modifications and equivalents be included within the scope of the claims which are appended hereto.

In addition, one aspect of the present invention relates to a cable storage tray 10/110/210/310 comprising:
a generally planar body 12/212 defining a first side 14/214 and an opposing second side 16/216;
a first outer radius limiter 34/134 and a second outer radius limiter 36/136 projecting from the first side 14/214 and a first inner radius limiter 30/130/230 and a second inner radius limiter 32/132/232 projecting from the first side 14/214, the inner radius limiters 30/130/230, 32/132/232 surrounded at least partially by the outer radius limiters 34/134, 36/136 so as to define an inner cable channel 38 thereinbetween and the first inner radius limiter 30/130/230 and the second inner radius limiter 32/132/232 defining a cross channel 40 thereinbetween, the cross channel 40 communicating with the inner cable channel 38, each of the outer radius limiters 34/134, 36/136 and the inner radius limiters 30/130/230, 32/132/232 defining a curved wall 28 and including cable management fingers 42/142 projecting generally perpendicular to the curved walls 28 thereof, the cable management fingers 42/142 of the inner radius limiters 30/130/230, 32/132/232 configured to retain a cable within the inner cable channel 38 and the cable management fingers 42/142 of the outer radius limiters 34/134, 36/136 configured to retain a cable wound around the outer radius limiters 34/134, 36/136; and
at least one magnet 18 such that the second side 16 of the body 12 is magnetically attachable to a ferromagnetic surface 54 via the at least one magnet 18.

A cable storage tray 10/110/210/310 includes further features, wherein the at least one magnet 18 is mounted by a press-fit to the body 12/212 of the tray 10/110/210/310.

A cable storage tray 10/110/210/310 includes further features, further comprising fastener holes 22 in addition to the least one magnet 18 for mounting the tray 10/110/210/310 to a surface with fasteners.

A cable storage tray 10/110/210/310 includes further features, further comprising at least one cable tie-down loop 46 provided on the first side 14/214 of the body 12/212.

A cable storage tray 10/110/210/310 includes further features, wherein the at least one magnet 18 is removably mounted to the body 12/212 of the tray 10/110/210/310 by a snap-fit arrangement.

Another aspect of the present invention relates to a cable storage tray 10/110/210/310 comprising:
a body 12/212 defining a first side 14/214 and an opposing second side 16/216;
the first side 14/214 defining an inner area for storing cables;
the first side 14/214 also defining an outer area for storing cables, wherein the outer area is separated from the inner area by at least one wall 28; and
at least one magnet 18 such that the second side 14/214 of the body 12/212 is magnetically attachable to a ferromagnetic surface 54 via the at least one magnet 18.

A cable storage tray 10/110/210/310 includes further features, further comprising two magnets 18 exposed from the second side 16/216.

### List of Reference Numerals and Corresponding Features

10 - cable storage tray
12 - body of cable storage tray
14 - first side of body
16 - second side of body
18 - magnet
20 - pocket
22 - fastener hole
24 - first/outer set of cable management structures
26 - second/inner set of cable management structures
28 - curved wall/spool
30 - first inner radius limiter
32 - second inner radius limiter
34 - first outer radius limiter
36 - second outer radius limiter
38 - inner cable channel
40 - cross channel
42 - cable management fingers
44 - notched region
46 - cable tie-down loop
48 - fiber optic splice enclosure
50 - fiber optic cable
51 - looped section of loop cable
52 - base of fiber optic splice enclosure
54 - ferromagnetic surface
55 - splice tray
56 - splice tray arrangement/assembly
58 - cable port
60 - input cable port
62 - output cable port
110 - second embodiment of storage tray
116 - second side of the body of the second embodiment of the storage tray
130 - first inner radius limiter of second embodiment of the storage tray
132 - second inner radius limiter of second embodiment of the storage tray
134 - first outer radius limiter of second embodiment of the storage tray
136 - second outer radius limiter of second embodiment of the storage tray
142 - cable management finger of second embodiment of the storage tray
210 - third embodiment of the storage tray
211 - flexible arm
212 - body of the third embodiment of the storage tray
214 - first side of the body of the third embodiment of the storage tray
216 - second side of the body of the third embodiment of the storage tray
220 - pocket of third embodiment of the storage tray
230 - first inner radius limiter of third embodiment of the storage tray
232 - second inner radius limiter of third embodiment of the storage tray
310 - fourth embodiment of storage tray
312 - body
314 - opening
322 - first element
323 - inner radius limiter
324 - second element
325 - outer radius limiter
328 - mating edge
330 - tabs
332 - slots
336 - side clips
338 - mating clips
342 - cable management fingers
350 - management unit
352 - latch member
354 - fingers
356 - clips
360 - magnet clips

## Claims

1. A cable storage tray (10/110/210/310) comprising:
a body (12/212);
a cable management structure (24, 26) positioned on the body (12/212);
**characterized in that**:
at least one magnet (18) is provided such that the body (12/212) is magnetically attachable to a ferromagnetic surface (54) via the at least one magnet (18).

2. A cable storage tray (10/110/210/310) according to claim 1, wherein the body (12/212) is a generally planar body (12/212) defining a first side (14/214) and an opposing second side (16/216), the cable management structure (24, 26) positioned at the first side (14/214) of the body (12/212) and the second side (16/216) of the body (12/212) magnetically attachable to a ferromagnetic surface (54) via the at least one magnet (18).

3. A cable storage tray (10/110/210/310) according to claim 2, further comprising two magnets (18) exposed from the second side (16/216).

4. A cable storage tray (10/110/210/310) according to claims 1-3, wherein the cable management structure (24, 26) defines at least one outer radius limiter (34/134, 36/136) surrounding at least partially at least one inner radius limiter (30/130/230, 32/132/232), the radius limiters (30/130/230, 32/132/232, 34/134, 36/136) defining curved walls (28).

5. A cable storage tray (10/110/210/310) according to claim 4, wherein the at least one outer radius limiter (34/134, 36/136) includes a first outer radius limiter (34/134) and a second outer radius limiter (36/136) and the at least one inner radius limiter (30/130/230, 32/132/232) includes a first inner radius limiter (30/130/230) and a second inner radius limiter (32/132/232), the inner radius limiters (30/130/230, 32/132/232) surrounded at least partially by the outer radius limiters (34/134, 36/136) so as to define an inner cable channel (38) thereinbetween.

6. A cable storage tray (10/110/210/310) according to claim 5, wherein the first inner radius limiter (30/130/230) and the second inner radius (32/132/232) limiter define a cross channel (40) thereinbetween, the cross channel (40) communicating with the inner cable channel (38).

7. A cable storage tray (10/110/210/310) according to claim 5, wherein the first and second inner radius limiters (30/130/230, 32/132/232) include cable management fingers (42/142) projecting generally perpendicular to the curved walls (28) thereof, the cable management fingers (42/142) configured to retain a cable (50) within the inner cable channel (38).

8. A cable storage tray (10/110/210/310) according to claim 5, wherein the first and second outer radius limiters (34/134, 36/136) include cable management fingers (42/142) projecting generally perpendicular to the curved walls (28) thereof, the cable management fingers (42/142) configured to retain a cable (50) wound around the outer radius limiters (34/134, 36/136).

9. A cable storage tray (10/110/210/310) according to claims 1-8, wherein the body (12/212/312) is constructed from identical halves (322, 324).

10. A cable storage tray (10/110/210/310) according to claims 1-9, further comprising a cable management unit (350) configured to releasably mount to the body (12/212/312), the cable management unit (350) including at least one cable management finger (354).

11. A method of managing a telecommunications cable:
- mounting a cable storage tray (10/110/210/310) to a surface (54), the cable storage tray (10/110/210/310) defining a cable management structure (24, 26); and
- wrapping at least a portion of the telecommunications cable around the cable management structure (24, 26);
- **characterized in that** cable storage tray (10/110/210/310) is magnetically mounted to a ferromagnetic surface (54).

12. A method according to claim 11, wherein the telecommunications cable is a fiber optic cable (50) and the cable management structure (24, 26) defines a radius limiter (30/130/230, 32/132/232, 34/134, 36/136).

13. A method according to claims 11 and 12, wherein the ferromagnetic surface (54) is defined by at least a portion of a telecommunications device.

14. A method according to claim 13, wherein the telecommunications device is a fiber optic enclosure (48) including at least one splice tray (55).

15. A method according to claims 11-14, wherein the telecommunications cable defines a loop cable, a portion of a looped section (51) of the loop cable wrapped around a radius limiter (30/130/230, 32/132/232, 34/134, 36/136) defining the cable management structure (24, 26), wherein the loop cable defines a plurality of optical fibers.
